# EUROPEAN PATENT APPLICATION

(11) **EP 4 811 279 A1**
(43) Date of publication of application: **23.09.2026**
(21) Application number: 25465518.6
(22) Date of filing: 20.03.2025
(51) Int. Cl.: G06T 7/00

(54) **DETERMINATION OF VESSEL GEOMETRY AND FLOW PARAMETER**

(71) Applicant: Siemens Healthineers AG, 91301 Forchheim (DE)
(72) Inventor: Berger, Martin, 91088 Bubenreuth (DE); Cimen, Serkan, West Orange, 07052 (US); Neumann, Dominik, 91052 Erlangen (DE); Turcea, Alexandru, 105500 Busteni (RO)
(74) Representative: Siemens Healthineers Patent Attorneys

(57) **Abstract**

The application relates to method comprising receiving a plurality of images of vessels, the plurality of images being obtained from different viewing angles relative to the vessels. In each of the plurality of images and for a first vessel (200) of the vessels, a distance of different points along the first vessel (200) relative to a reference location at the first vessel is determined and in each of the plurality of images, and at each of the different points, a parameter of the first vessel for blood flow through the first vessel(200) is determined, providing, for each of the plurality of images, a data sequence indicating the parameter relative to a distance to the reference location. A sequence alignment of the data sequences obtained for the plurality of images is carried providing aligned data sequences. An aggregated representation (250) of the first vessel is determined based on the aligned data sequences, and a flow parameter is determined for the first vessel from the aggregated representation.

## Description

### TECHNICAL FIELD

Various examples of the disclosure generally relate to images showing vessels, e.g. obtained during angiography. Various examples specifically relate to determining an aggregated representation of a vessel and to determining a flow parameter from the aggregated representation.

### BACKGROUND

Coronary X-ray angiography can be used for the assessment of coronary arteries and the diagnosis of coronary artery disease (CAD). For the functional assessment of coronary artery stenosis the Fractional Flow Reserve (FFR) index might be used. FFR is a hemodynamic index to determine the hemodynamic significance of a given epicardial coronary stenosis. It can be defined as the ratio of maximal achievable blood flow in a myocardial bed in the presence of an epicardial stenosis to the theoretical normal maximal flow in the same myocardial distribution.

Angio-based coronary assessment pipelines usually employ a 3D reconstruction step whose goal is to reconstruct the 3D vessel geometry. However, a full 3D image dataset showing the organ under examination with sufficient resolution in all three dimensions is not always available.

### SUMMARY

Therefore, a need exists for an improved method of determining flow parameters of vessels.

This need is met by the features of the independent claims. Further aspects are described in the dependent claims.

According to a first aspect a computer-implemented method is provided comprising the step of receiving a plurality of images of vessels wherein the plurality of images was obtained from different viewing angles relative to the vessels. The step of receiving a plurality of images does not contain the step of obtaining these images, e.g. by a medical imaging device, however receiving a plurality of images is to be understood as receiving image data of such images which have been previously obtained with an imaging device. In each of the plurality of images a distance of different points of a first vessel from the vessels is determined along the first vessel relative to a reference location at the first vessel. Furthermore, in each of the images and at each of the different points a parameter of the first vessel for the blood flow through the first vessel is determined so that for each of the images a data sequence is provided describing the parameter relative to the distance to the reference location. The reference location, which can be a reference point at the vessel, can be a tip of a catheter or any anatomic location such as a bifurcation of the vessel. In addition, a sequence alignment of the data sequence obtained for the plurality of images is carried out providing aligned data sequences. Based on the aligned data sequences it is possible to determine an aggregated representation of the first vessel and a flow parameter of the first vessel can be determined from the aggregated representation. Thus, the invention can provide a simplified technique for determining a vessel representation and a flow parameter, e.g. a hemodynamic parameter, within the vessel, especially when no full 3D dataset of the vessel or the organ under examination is available.

In this application, vessels are blood vessels. Blood vessels are the tubular structures of a circulatory system that transport blood throughout a vertebrate's body. There are five types of blood vessels: the arteries, which carry the blood away from the heart; the arterioles; the capillaries, where the exchange of water and chemicals between the blood and the tissues occurs; the venules; and the veins, which carry blood from the capillaries back towards the heart.

The viewing angle relative to the vessels is the angle from which the image of the vessels has been taken. This can depend on the rotatory angle of a source and/or a detector of a medical imaging device. In such a medical imaging device, the source and/or detector can be mounted in a rotatable manner, making them rotatable by certain angles, the viewing angles, around an object to be imaged, such as a human or animal body.

In step 320 for the detected vessel the distance of each point along the vessel relative to a reference point called reference location is determined. The reference location could be a tip of the catheter or any other anatomic location such as a bifurcation which can be determined easily and without doubt in the images. In particular, the reference location is any location in the image which can be detected in the images with a high reproducibility and likelihood.

The data sequence can describe the radius evolution for different distances to the reference location. The data sequence corresponds to a sequence of data points which describe the parameter, such as the available cross cross-sectional area available for the blood at the corresponding location relative to the reference location.

Furthermore, a computing device is provided comprising a processing unit and a memory with program code wherein the processing unit, when executing the program code is configured to perform a method as discussed above or as discussed in further detail below. Additionally, an angiography device is provided comprising the computing device. With the above-described method and computing device it is possible to determine the flow parameter in the first vessel without the need to generate a full 3D model of the area surrounding the first vessel. Based on the flow parameter it can be determined whether further examination of the corresponding vessel is necessary or not.

Furthermore, it is possible to additionally determine in each of the plurality of images, for the first vessel at least one additional feature of the first vessel and its distance to the reference location, wherein the sequence alignment is carried out taking into account the distance of the at least one additional feature to the reference location. The distance of the feature to the reference location is the distance of the location of the vessel at which the feature is determined. This additional feature can help to further improve the alignment of the plurality of images relative to each other. When the alignment is improved the accuracy of the aggregated representation is improved and thus the determination of the flow parameter.

The additional feature can include features of the first vessel such as a bifurcation occurring at the first vessel, a vessel segment label or a stenosis marker or the like. These features such as a bifurcation or stenosis marker can be either detected with a high precision and high reproducibility or can help to correctly identity a vessel in case of a vessel segment label. As indicated above, the improved aggregated representation helps to precisely determine the flow parameter.

The parameter can represent a cross-sectional area available for the blood flow through the first vessel. It can be a parameter representing a surface or a cross-sectional area available for the blood flow in the first vessel. The cross-sectional area is a valid parameter describing the hydraulic conditions present in the vessel. The parameter can include a diameter or radius of the first vessel. When the cross-sectional area, the diameter or the radius of the first vessel is known, a quantification of the blood flow through the first vessel becomes possible and flow parameters such as fractional flow reserve can be determined.

The step of determining the aggregated representation can include the step of aggregating features of the first vessel belonging to the same location. Aggregating features of the first vessel belonging to the same location includes aggregating the features over at least two images taken from different viewing angles. The step of determining the aggregated representation can include the step of aggregating locations of the first vessel belonging to the same location. When aggregating the same locations, geometric information of the first vessel is aggregated so that a picture of geometry of the first vessel is obtained. The geometry of the first vessel helps to understand and correctly interpret the flow information present in the corresponding vessel.

It is possible to aggregate the parameter as geometric mean. Especially for the cross-sectional area the geometric mean is a valuable parameter which helps to correctly represent the geometry present in the vessel. It can help to remove outliers determined in the parameter and helps to more precisely describe the geometry available for the flow.

Determining the aggregated representation can include the step of aggregating distances belonging to the same location, wherein the distances to the reference location are aggregated with aggregating a maximum difference between a current location and a previously aggregated location. When the maximum difference is used and aggregated, the result can be a more accurate estimate of the real 3D distance as a 3D segment length determined in a 2D projection of an image is less or equal to the real 3D length.

It is further possible to determine for each of the plurality of images, a curvature of the first vessel along the different points, wherein determining the aggregated representation comprises aggregating the curvature at each of the different points. The curvature is a parameter which helps to precisely determine a representation of the vessel and especially the cross section available for the flow. As a consequence, the flow parameter can be assessed more precisely.

Determining the flow parameter can include determining at least one of a fractional flow reserve, FFR, an index of microcirculatory resistance, IMR, and microvascular resistance reserve, MRR. All these parameters are important parameters in a diagnosis of a vessel disease.

Preferably the images are 2D X-ray images, in particular X-ray projection images. Preferably the images are fluoroscopy images. The images can include angiographic X-ray images of the heart. Coronary X-ray is the method of choice for the assessment of coronary arteries and the diagnosis of coronary artery disease, and the method described above or in further detail below can be applied to those images.

For the sequence alignment it is possible to use methods such as Dynamic Time Warping and Optimal Subsequence Bijection. Both methods can provide good results in the present field of application.

Furthermore, a computer program is provided comprising program code to be executed by a processing unit which, when executed by the processing unit causes the processing unit to carry out a method as discussed above or as discussed in further detail below.

Finally, a carrier is provided comprising the computer program wherein the carrier is one of an electronic signal, an optical signal, a radio signal, and a computer-readable storage medium.

With the method discussed above it is possible to determine a flow parameter or hemodynamic parameter for a vessel without the need to have a full three-dimensional data set and/or without the need of a traditional 3D reconstruction, e.g. based on multiple 2D views. This becomes possible by aggregating information of the vessel from multiple views. It has been observed that a full three-dimensional model of the vessel is not required for most of the applications. With the determination of the parameter at the different points relative to a reference location and the sequence alignment an aggregated representation of the vessel is obtained which is accurate enough to precisely determine a flow parameter such as a fractional flow reserve, FFR, or any other flow parameter for a vessel.

With the method as per the invention a flow parameter can be determined based on two-dimensional fluoroscopy images without the need to create on the basis of 2D images of the object a three-dimensional data set of the object with almost isotropic resolution in all directions. Advantageously this step is omitted, using the aggregation and the sequence alignment as described.

It is to be understood that the features mentioned above and features yet to be explained below can be used not only in the respective combinations indicated, but also in other combinations or in isolation without departing from the scope of the present application.

Features of the above-mentioned aspects and embodiments described below may be combined with each other in other embodiments unless explicitly mentioned otherwise.

### BRIEF DESCRITION OF THE DRAWINGS

The foregoing and additional features and effects of the application will become apparent from the following detailed description when read in conjunction with the accompanying drawings in which like reference numerals refer to like elements.
Fig. 1 shows a schematic view of an angiography device configured to generate images of vessels for which a flow parameter can be determined.
Fig. 2 shows two angiographic images of the same person acquired with different acquisition geometry.
Fig. 3 shows a schematic view of one of the vessels being highlighted but viewed from different angulations.
Fig. 4 shows a schematic view of a geodesic distance in the vessel relative to a reference location.
Fig. 5 shows a schematic view of the extracted lumen contours used to determine a radius for the different views together with the determined geodesic distance.
Fig. 6 shows a schematic processing flow how a flow parameter can be determined for the vessel.
Fig. 7 shows a schematic view of a sequence alignment used to determine aggregated information for the vessel.
Fig. 8 shows a schematic view of a flowchart comprising steps used to determine a flow parameter for a vessel.

### DETAILED DESCRIPTION

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof. Independent of the grammatical term usage, individuals with male, femal or other gender identities are included within the term.

In the following a solution is discussed where geometric information of vessels is aggregated from multiple views having different angular settings, while keeping preconditions such as minimum angular separation and full visibility of the vessels in all the used views to a minimum.

The invention will be discussed in connection with angiographic X-ray images obtained by an angiography device, however any other imaging system could be used where images of an organ with vessels can be obtained and where not a full 3D dataset with similar resolution in all three directions is available, but only 2D images obtained at different angles relative to a region of interest. Furthermore, the images are images of the heart showing the coronary arteries, however any other organ with vessels could be used such as liver or kidney. In general, the images shown vessels representing tube-like structures that carry fluids, especially blood.

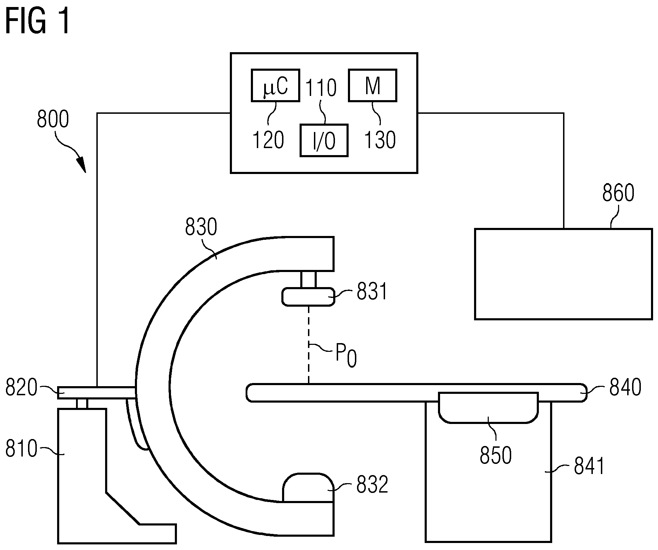

As an exemplary angiography device, FIG. 1 schematically illustrates aspects with respect to a C-arm machine 800. The C-arm machine 800 may be used for both angiography and fluoroscopy. In FIG. 1, the C-arm machine 800 is in neutral position P₀. It is possible to manipulate the C-arm machine 800 to be in a rotated position deviating from the neutral position P₀. The angle between the neutral position P0 and a specific rotated position is referred to as the angiography angle or the fluoroscopy angle. The C-arm machine 800 comprises a rotatable C arm 830 on which X-ray emission means 831 and X-ray detection means 832 may be mounted. The C arm 830 and thereby X-ray emission means 831 and X-ray detection means 832 are positioned to center around patient surface 840. X-ray emission means 831 can emit X-rays which penetrate through a patient positioned on the patient surface 840. X-ray detection means 832 detects the X -rays emitted from X-ray emission means 831. When a patient on the patient surface 840 is injected with a radio-opaque contrast agent into the patient's vessels, some of the X-rays emitted by X-ray emission means 831 are absorbed by the radio-opaque contrast agent, leading X-ray detection means 832 to detect a sequence of images of the vessels filled with the radio-opaque contrast agent, i.e. an angiogram. X-ray emission means 831 and X-ray detection means 832 may also collectively be referred to as X-ray imaging means. As a consequence, with the different position of the C arm 830 images are obtained which show the patient's vessels in different viewing angles.

The C arm 830 can be coupled to a C arm rotation unit 820. The C arm rotation unit 820 may be any motorized means configured to rotate the C arm 830 according to an angiography angle or a fluoroscopy angle. The C arm rotation unit 820 may be attached to and controlled by a C arm control until 810. The C arm control unit 810 may be any kind of circuitry capable of controlling C arm 830. For example, the C arm control unit 810 may include a computing device.

The C-arm machine 800 may further include a control panel 850 mounted onto a side surface of patient surface support 841. The control panel 850 may be used to control C arm 830 in order to guide medical specialists to pathological vessels. Fig. 1 does not show any connections between control panel 850 and C arm 830 to simplify the depiction of the exemplary C-arm machine 800. In some examples, the connection may be wireless. In some further examples, the connection may be wired and may e.g., be integrated into the ceiling of the room where the C-arm machine 800 is located.

The device 800 can include a central computing device 100 configured to control the device 800. The computing device 100 comprises an interface 110 which can be provided for transmitting data or control messages to other entities and for receiving data and control messages from other entities. The computing device furthermore comprises a processing unit 120 which is responsible for the operation of the computing device 100. The processing unit 120 comprises one or more processors and can carry out instructions stored on a memory 130, wherein the memory may include a read-only memory, a random access memory, a mass storage, a hard disk or the like. The memory can furthermore include suitable program code to be executed by the processing unit 120 so as to implement the functionalities described in further detail below where a flow information for a vessel be determined based on the images generated by device 800.

The C-arm device 800 may also include a display 860. The display 860 may be used to display information to the medical specialist, such as real-time X-ray image with an overlaid vessel roadmap image including a path to one or more pathological vessels, and/or a location of the pressure wire for measuring the at least one measurement associated with the at least one hemodynamic index. Further, the display 860 may be used to display vessel segmentation data included in overlaid vessel roadmap images, including labels for various vessel segments. In some examples, display 860 may be a touch screen, which may be used to toggle the display of the vessel segmentation data on and off.

The C-arm machine 800 may be connectable to a database (not shown in FIG. 1), such as a PACS located within a local network of a hospital, for storing angiograms and/or measurements associated with the at least one hemodynamic index.

According to various examples, a name (of a specific segment of a coronary artery of interest or of the entire coronary artery of interest) can be determined based on a region of interest of the angiography exam. For example, such a region of interest may comprise the left or right branch of the coronary vessel tree, or a specific vessel section. The region of interest may be determined based on user input, or on a patient's electronic medical record included in a health information system.

For example, the coronary artery of interest within the region of interest may be one or more segments of the coronary arteries of the heart.

In the following an alternative to the 3D reconstruction task is discussed, based on the observation that a full 3D model is not required for most of the angio-based coronary assessment tasks. Instead, obtaining accurate cross-sectional diameters and/or cross-sectional areas of the target vessel along with accurate distances between these cross-sections is sufficient. Additional geometric features such as local curvature of the vessel could also be obtained with the proposed method. The output of the proposed method is thus a so-called 2.5D geometry, which lacks 3D locations such as centerline points and lumen meshes but contains sufficient information for performing the desired coronary assessment.

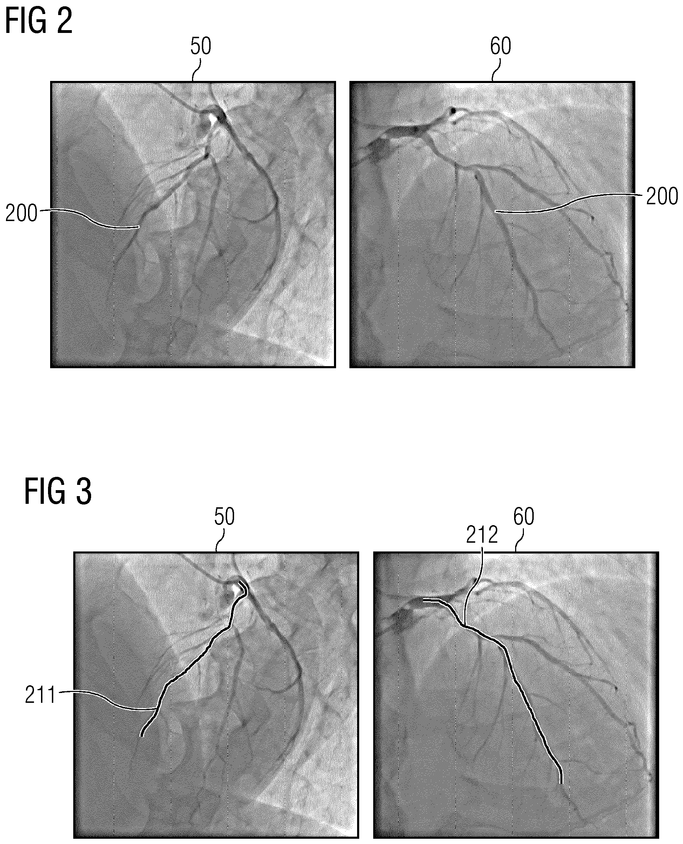

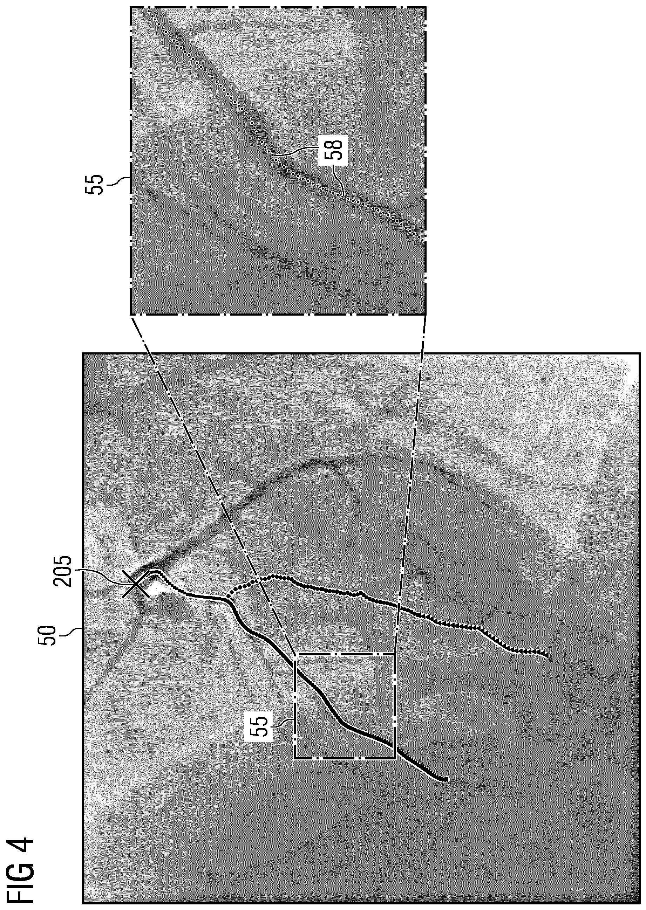

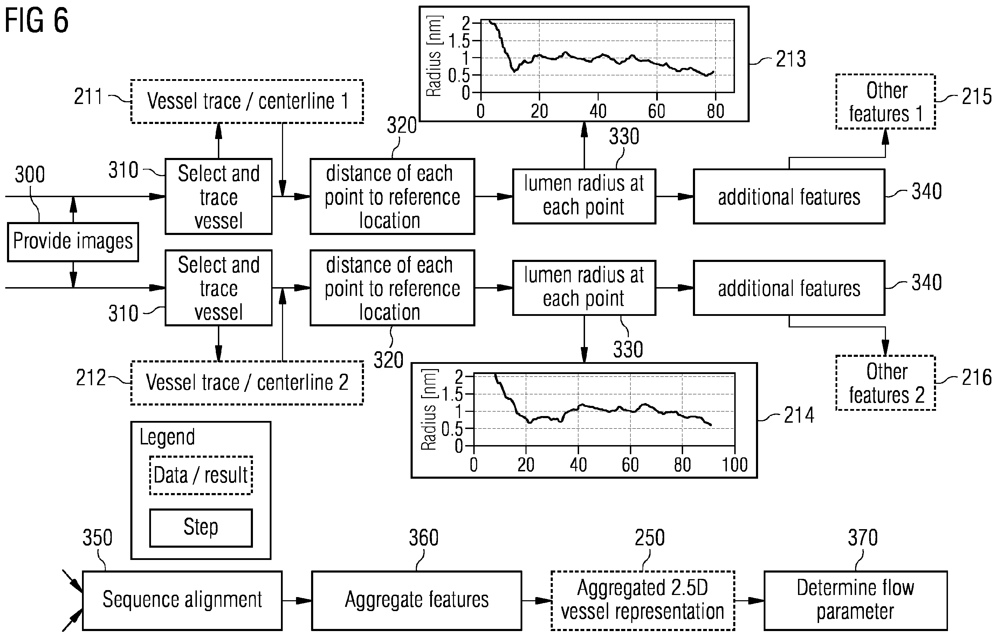

Fig. 2 shows a schematic view of two angiographic images 50 and 60 of the same patient, however acquired with a different acquisition geometry. Both images show the same vessel 200 which is represented differently in the images 50 and 60 in view of the different imaging angle of the C-arm. In the following it will be discussed in connection with Fig. 6 in more detail how flow information such as the fractional flow reserve can be determined based on different views of an organ or a body part comprising vessels such as an artery. In addition to Fig. 6 reference will be made to the images shown in Fig. 2 to 5 for further explanation. The invention is discussed in connection with two different views or sequences (where each view includes a full angiography sequence including multiple images, also called image frames. The number of 2D images depends on the time duration of the scan (in the order of 5 to 15 s and the image frame rate ca be between 7 to 15 frames per second so that each view can include between 50 and 200 (image) frames). Each view is acquired based on a specific acquisition geometry such as a different viewing angle. In the present case, two or more views are used, each including multiple frames. Referring to Fig. 6 this means that these views or sequences including 50 and 60 are provided in step 300 to the computing device 100 where the processing discussed in Fig. 6 may be carried out. In step 310 in each of the images 50 and 60 a first vessel, or simply called vessel hereinafter is selected such as the vessel 200 shown in Fig. 2 wherein the same vessel is selected in both images. The vessel can be identified based on known image post-processing methods. As a result, a vessel trace or centerline 211 is provided in each of the images here the traces 211 and 212 as shown in Fig. 3. In step 320 for the detected vessel the distance of each point along the vessel relative to a reference point called reference location is determined. The reference location could be a tip of the catheter or any other anatomic location such as a bifurcation which can be determined easily and without doubt in the images. Referring to Fig. 4, a reference location 205 is shown such as the catheter tip and the path along the vessel is divided into several points which may have a distance of one or several millimeters or even in the sub-millimeter range (such as 0.2 to 0.4 mm) depending on the provided solution.

Fig. 4 furthermore shows an enlarged section 55 of the image 50 showing the sequence of points 58 wherein for all of these points a distance relative to the reference location 205 is determined. In this step, preferably the projected two-dimensional geodesic distance from the reference location to each point on the vessel is determined. After this step 320 the contours are determined at each of the locations in order to extract a lumen radius in step 330. As a result, a sequence of parameters is obtained such as a diagram which indicates the radius or diameter relative to the reference location. This diagram is shown in Fig. 6 for the two vessel orientations by the sequences 213 and 214.

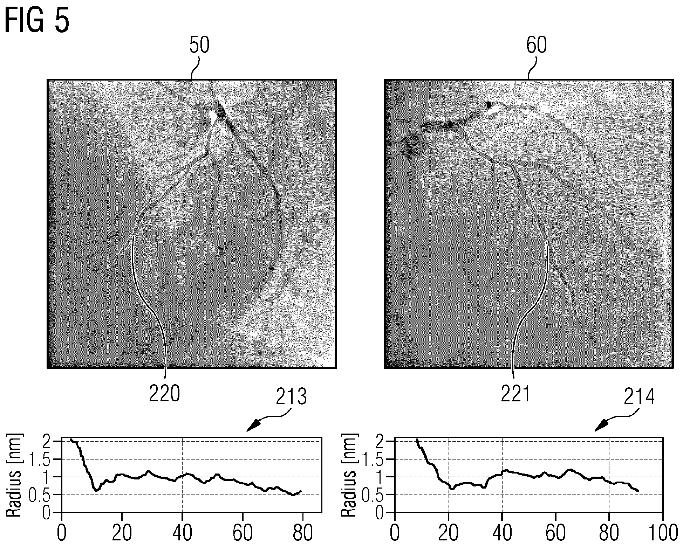

Referring additionally to Fig. 5, the contours 220 and 221 are determined and the lumen radius along the vessel at the different points. The result of the radius calculation is shown in the diagram in the lower part of Fig. 2, the sequence 213 which describes the radius in millimeters relative to the distance to the reference location wherein the sequence 213 shows the curve for the image 50 and the sequence 214 shows the same situation for another projection but the same vessel. This step includes a vessel segmentation and lumen radius extraction at each of the points along the vessel. Referring again to Fig. 6 after this step 330 where a surface area, a cross-sectional area, or radius of the vessel is determined, it is possible in an optional step to use additional features for each point on the vessel trace such as the local curvature of the vessel, wherein the same horizontal axis, x-axis, the distance is used. This step 340 of the detection of additional features along the vessel provides the additional features such as curvature, the features 215 and 216. After step 340 a sequence of data is obtained for each of the images and in step 350 it is possible to carry out a sequence alignment between the different obtained sequences. The sequence alignment can include an algorithm such as Dynamic Time Warping, DTW, or Optimal Subsequence Bijection or any of its variants. This sequence alignment provides a mapping or correspondence between the locations in the views by computing the optimal alignment cost of the provided sequences. The sequence alignment method leads to aligned sequences for the radius. Here a mapping can be determined between each point on the first sequence to a point on the second sequence such that some error metric based on the radius and potentially other features is minimized. In step 360 additional features could be used for the alignment such as vessel segment labels or a stenosis marker or bifurcation locations could be included as inputs to the sequence alignment algorithm. Furthermore, it is possible that each feature is attributed a different importance by scaling its associated error cost when optimizing the mapping function between the different sequences.

Once an optimal mapping function is obtained, features for which it is determined that they pertain to the same location on the vessel of interest are aggregated in order to arrive at an aggregated vessel representation 250 shown in Fig.6. The mapping of step 350 is then used for the aggregation. Depending on the selected feature an aggregation can be carried out differently depending on the parameter. By way of example the diameters could be aggregated either via a geometric mean operation wherein the resulting value can be considered as an equivalent to the hydraulic diameter at that location or one could compute the equivalent hydraulic area. The distances to the reference location could be aggregated by adding up the maximum difference between the current mapped locations and the previously aggregated location. This resulting value could be a more accurate estimate of the real 3D distance. This is based on the fact that a 3D segment length measured in a 2D projection is less or equal to the real 3D segment length. Similar aggregation functions could be devised for other features. The result of steps 350 and 360 are aligned data sequences which are aligned relative to one another such that the same location at the vessel is provided at the same distance relative to the reference location.

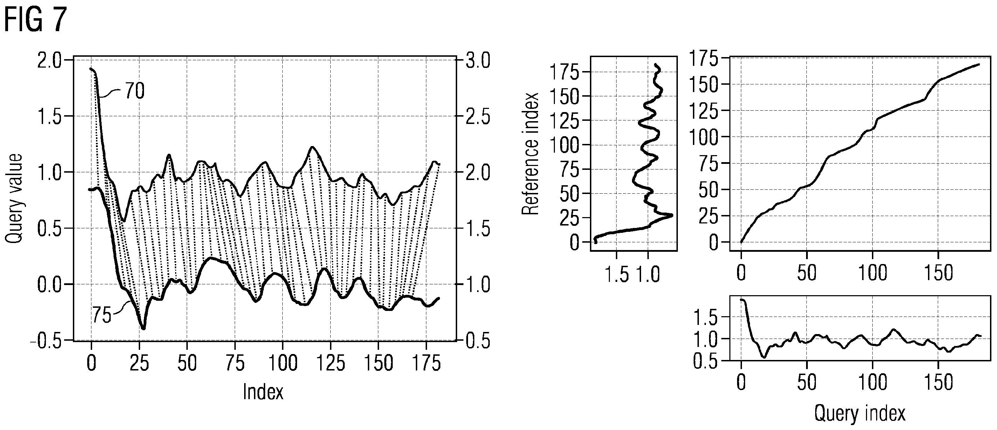

Fig. 7 shows a schematic view how a sequence of values such as the radius for one image can be aligned to the sequence 75 of another image. On the right hand side along the y axis of the upper two plots is the reference sequence (e.g. the radius profile of the first view) and along the x axis the query sequence (e.g. the radius profile from the second view). In the center plot of the right-hand side the mapping path representing the minimum cost is shown, i.e. the result of DTW for these two sequences. From that one can directly read the mapping index in query- index in reference. The result of the alignment is a so-called 2.5D representation for an aggregated vessel representation 250 for the vessel of interest with cross-sections separated by the estimated 3D distance between them and a hydraulic diameter or areas which can then be directly used as input for the determination of a flow parameter in step 370 such as the fractional flow reserve computation and a quantitative coronary angiography, QCA.

The sequence mapping carried out in step 350 and 360 could be further improved by augmenting the error function to be optimized with additional terms based on parameters such as reprojection errors. This could be achieved by
- computing the epipolar line associated to each location in one view onto the other views,
- computing the intersection of the epipolar line to the target vessel in each view,
- computing the epipolar line from the intersection points back to the initial view,
- computing the intersection of the epipolar line to the target vessel in the initial view, and/or
- computing the distance between the intersection point and the initial location.

With the inclusion of these additional error terms mapping function optimization could also consider acquisition geometry. A global translation error occurring due to table movement or other factors can be cancelled out by mean-centering the computer distances or using other regularization methods. The method discussed above also supports stitching which means that not the complete length of the vessel is provided in one of the images, but only part of it.

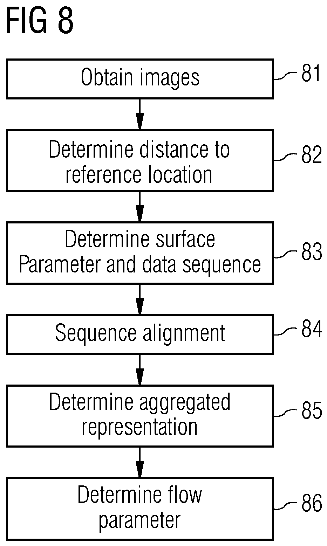

Fig. 8 summarizes some of the steps carried out in the above discussed method. In step 81 at least two images or a plurality of images of a body are obtained which indicate vessels, by way of example angiographic images of the heart wherein the images were generated with different viewing angles relative to the object under examination. Referring to Fig. 1 this means that the C-arm has different rotation angles. Obtaining the images can include retrieving or selecting the images from a storage medium such as memory 130. The images obtained from the body include vessel representations, e.g. obtained with the angiographic device 800 shown in Fig. 1. In step 82, in each of the images and for one of the vessels a distance of different points along the first vessel relative to a reference location is determined. The reference location is any location along the vessel which can be precisely determined in the images. This was discussed above in connection with step 320 and Fig. 4. Furthermore, for each of the points a parameter such as a radius or diameter is determined in step 83 and the result is a data sequence describing the radius evolution for different distances to the reference location. The data sequence corresponds to a sequence of data points which describe a parameter such as the available cross-sectional -area available for the blood at the corresponding location relative to the reference location. The reference location is any location in the image which can be detected in the investigated images with a high reproducibility and likelihood. In step 84 a sequence alignment can be carried out for the different data sequences resulting in aligned sequences. Referring to Fig. 7 this could mean that sequence 75 is aligned to sequence 70. The alignment was also discussed above in connection with steps 350 and 360 in more detail. In step 85 an aggregated representation of the vessel is determined based on the aligned data sequences which means that features pertaining to the same location of the vessel are aggregated and this aggregated representation provides a precise model which can then be used in step 86 for the determination of a flow parameter through the vessel. The flow parameter of the vessel represents the flow of blood through the vessel. The flow parameter can include parameters such as the fractional flow reserve, FFR, an index of microcirculatory resistance, IMR, and microvascular resistance reserve, MRR.

From the above said some general conclusions can be drawn. In this method it is possible to determine in addition in each of the plurality of images at least one additional feature of the first vessel and its distance to the reference location wherein the sequence alignment may be carried out taking into account the distance of this at least one additional feature to the reference location. As discussed above other features such as curvature or bifurcation points could be used at a sequence alignment to improve the alignment. This additional feature can include a bifurcation of the vessel, a vessel segment label, or a stenosis marker or any other feature which can be easily identified in the image.

The parameter that is determined in the different points in the vessel can represent a cross-sectional area available for the blood flow through the vessel. It can include the diameter or the radius of the vessel at the corresponding location. This parameter can then be used to determine the actual flow surface for the blood through the vessel at the corresponding location.

The determination of the aggregated representation can include the aggregation of locations of the vessel belonging to the same location in the vessel. Here it is possible to use the geometric mean for the parameters such as the radius or diameter.

For the aggregation of the distances belonging to the same location it is possible to aggregate the distances to a reference location including aggregating a maximum difference between the current location and the previously aggregated location. This maximum distance is then used as new aggregated distance.

Furthermore, it is possible that in each of the images a curvature of the first vessel along the different points is determined wherein determining the aggregated representation includes aggregating the curvature obtained at each of the different locations in the images.

The determined flow parameter can include the fractional flow reserve (FFR) or any other parameter such as index of microcirculatory resistance (IMR) or microvascular resistance reserve (MRR).

Preferably the images are X-ray images. The images can include angiographic X-ray images of the heart and the sequence alignment algorithm can include a Dynamic Time Warping algorithm or an Optimal Subsequence Bijection algorithm.

A comprehensive angio-based coronary assessment pipeline includes subtasks such as vessel detection, segmentation, branch labelling, fractional flow reserve (FFR) computation, etc. Aggregating information from multiple views is necessary because it provides a complete picture of the coronary anatomy, especially in the presence of eccentric stenosis. Single-view analysis often misses or misinterprets these irregularities, leading to inaccurate assessments. Therefore, multiple views enable better diagnostic accuracy. However, aggregating information extracted from multiple views poses major challenges.

Angio-based coronary assessment pipelines developed up to now (e.g., 3D QCA, FFR) are generally employing a 3D reconstruction step whose goal is to reconstruct the 3D vessel geometry based on the 2D geometries of the target vessel extracted in each view, and the geometric parameters of the acquisitions (primarily the projection matrix of the angiography system). This is achieved by performing a back-projection of the 2D geometries into the 3D space. However, this approach poses multiple challenges and requires preconditions, such as:
- Imposing a minimum angulation separation between views (typically >= 30 degrees).
- Having a complete coverage of the target vessel in all the used views, which poses difficulties in certain angulations such as RCA RAO (Right coronary artery right anterior oblique) views and LCA LAO-CAU (Left Coronary artery, Left Anterior Oblique, with CAUDAL angulation) views due to foreshortening.
- Handling processing views which are not acquired simultaneously (e.g., using a biplane system), due to cardiac and respiratory movement, misalignment of cardiac phases, patient movement, table movement (e.g., panning between views) etc.
- Handling difficult reconstructing regions with severe vessel tortuosity due to apparent foreshortening in at least one of the projections.
- Ensuring accurate calibration of the angiography system to maintain the precision of the projection matrices.

Some of these challenges can be tackled by introducing an optimization procedure with regularization in the 3D reconstruction step and employing additional constraining information such as the location of the catheter tip along with locations of other fixed landmarks (such as stenoses and bifurcations, potentially provided via user input). However, generally the 3D reconstruction task remains an ill-posed problem and thus a robust solution remains a big challenge.

The proposed solution discussed above circumvents the disadvantages of the full 3D reconstruction by allowing the result to be at 2.5D geometry so that the preconditions imposed by the 3D reconstructions are relaxed. Despite the fact that a full 3D geometry process with a full 3D mesh of the target vessel is not provided the obtained information as discussed above is often sufficient for a coronary assessment such as the QCA and FFR computation. As a consequence, the proposed approach has the advantage of being able to process views independent of angulation, views that are not acquired simultaneously and is furthermore robust to movement such as cardiac and respiratory movement, patient movement or table movement and also enables vessel stitching.

## Claims

1. A computer-implemented method comprising:
- receiving (300, 81) a plurality of images (50, 60) of vessels, the plurality of images being obtained from different viewing angles relative to the vessels,
- determining (320, 82), in each of the plurality of images and for a first vessel (200) of the vessels, a distance of different points along the first vessel (200) relative to a reference location at the first vessel,
- determining (330, 83), in each of the plurality of images, and at each of the different points, a parameter of the first vessel for blood flow through the first vessel (200), providing, for each of the plurality of images, a data sequence indicating the parameter relative to a distance to the reference location,
- carrying out (350, 84) a sequence alignment of the data sequences obtained for the plurality of images providing aligned data sequences,
- determining (360, 85) an aggregated representation (250) of the first vessel based on the aligned data sequences,
- determining (370, 86) a flow parameter for the first vessel from the aggregated representation.

2. The method of claim 1, further determining, in each of the plurality of images, for the first vessel (200) at least one additional feature of the first vessel and its distance to the reference location, wherein the sequence alignment is carried out taking into account the distance of the at least one additional feature to the reference location.

3. The method of claim 2, wherein the additional feature comprises at least one of a bifurcation of the first vessel (200), a vessel segment label, a stenosis marker.

4. The method of any preceding claim, wherein the parameter comprises a cross-sectional area available for the blood flow through the first vessel (200).

5. The method of any preceding claim, wherein the parameter comprises a cross-sectional area, a diameter, or a radius of the first vessel (200).

6. The method of any preceding claim, wherein determining the aggregated representation (250) comprises aggregating features of the first vessel (200) belonging to the same location in the first vessel (200).

7. The method of any preceding claim, wherein determining the aggregated representation comprises aggregating distances belonging to the same location, wherein the distances to the reference location are aggregated with aggregating a maximum difference between a current location and a previously aggregated location.

8. The method of any preceding claim, further determining, for each of the plurality of images, a curvature of the first vessel along the different points, wherein determining the aggregated representation comprises aggregating the curvature at each of the different points.

9. The method of any preceding claim, wherein determining the flow parameter comprises determining at least one of a fractional flow reserve, FFR, an index of microcirculatory resistance, IMR, and microvascular resistance reserve, MRR.

10. The method of any preceding claim, wherein the images are two-dimensional X- ray images.

11. The method of any preceding claim, wherein the sequence alignment is one of a Dynamic Time Warping and Optimal Subsequence Bijection.

12. A computing device (100) comprising a processing unit and a memory comprising program code, wherein the processing unit, when executing the program code is configured to perform a method as mentioned in any of claims 1 to 11.

13. An angiography device (800) comprising the computing device of claim 12.

14. A computer program comprising program code to be executed by a processing unit, which when executed by the processing unit, causes the processing unit to carry out a method as mentioned in any of claims 1 to 11.

15. A carrier comprising the computer program of claim 14, wherein the carrier is one of an electronic signal, an optical signal, a radio signal, or a computer readable storage medium.
